# EUROPEAN PATENT APPLICATION

(11) **EP 2 418 626 A1**
(43) Date of publication of application: **15.02.2012**
(21) Application number: 10191412.5
(22) Date of filing: 16.11.2010
(51) Int. Cl.: G07C 9/00, H01M 2/10

(54) **Battery holder for a key fob**

(30) Priority: 14.08.2010 DE 102010034404
(71) Applicant: Johnson Controls Technology Company, Holland, MI 49423 (US)
(72) Inventor: Bieletzki-Welz, Viktor, 42799, Leichlingen (DE); Lukanov, Alexander, 1574, Sofia (BG); Yordanov, Ivan, 1784, Sofia (BG); Montarou, Laurent, 92600, Asnieres sur Seine (FR); Abi Chaaya, Elie, 95280, Jouy Le Moutier (FR); Vincent, John, 50674, Cologne (DE)
(74) Representative: Liedtke, Markus

(57) **Abstract**

The invention relates to a battery holder (1) for a key fob (17). According to the invention a holding element (4) is enclosed by a gripping and gasket element (3), at least in sections or area by area, wherein a holding range (9) is formed at the holding element (4) and guiding ranges (12) are formed on both sides of the holding range (9) on its edge, the guiding ranges (12) being formed in a manner that they correspond to guiding grooves within the key fob (17).

## Description

The invention relates to a battery holder for a key fob according to the preamble of claim 1.

Key fobs for operating a central locking system of a vehicle by remote control are known as prior art. Conventional coin cells being an energy storage device are inserted in these key fobs and are covered by separate cover.

It is an object of the present invention to give an improved battery holder for a key fob, the battery holder being especially space and cost saving, contact secure and easy to operate, especially without to open the tight aria of the Button and Rear Covers.

This object according to the invention is achieved by the features given in claim 1.

Preferred embodiments of the invention are given in the dependent claims.

According to the invention concerning the battery holder for a key fob, a holding element is enclosed by a gripping and gasket element, at least in sections or area by area, wherein a holding range is formed on the holding element and guiding ranges are formed on both sides of the holding range on its edge, the guiding ranges being formed in a manner that they correspond to guiding grooves within the key fob. Thus, a compact battery holder is created using the limited space within the key fob in a better way. A base area of the holding range is formed corresponding to the base area of a battery to be arranged. Thus, the battery holder for the battery to be arranged is formed in an optimised way.

In a preferred embodiment, several, preferably four, circularly oriented holding clamps are directly formed on edges of the holding range, wherein the circle being created by the holding clamps is formed corresponding to the outer diameter of the battery.

Preferably, the holding clamps are rectangularly or nearly rectangularly oriented to the residual holding element in such a manner that a battery, being arranged in the holding range of the holding element, is securely held between the holding clamps.

The holding element is preferably made of a robust thin material, preferably a thin sheet metal. That is why the holding element is light, robust and easily electrically connectable.

The gripping and gasket element is preferably made of sealed not electrical conductive material, by what it can be easily produced, for example using an injection moulding process.

The gripping and gasket element especially preferably comprises a handhold range and a sealing range forming a combined one-piece component. Such an integrated component facilitates production of the battery holder and reduces its production time.

The sealing range of the gripping and gasket element is formed corresponding to a sealing range within the key fob. A waterproof cavity is formed in the key fob as battery compartment corresponding to the battery holder enabling the holding of the battery holder. A sealing range is arranged on the input range of the battery compartment. The sealing ranges of the gripping and gasket elements and the battery compartment, being formed and arranged corresponding to one another, enable a waterproof or at least water-protected arrangement of the battery within the battery compartment of the key fob.

In a particular advantageous embodiment, an additional sealing element can be formed or arranged at the sealing range of the gripping and gasket element, resulting in the battery compartment and its sealing can being more resistant to higher water pressure.

In another advantageous embodiment, the gripping and gasket element is at least in certain areas provided with a surface coating or a structured surface. Thus, a better grip of the handhold range or an adaptation of the surface feel of the handhold range to the particular customer wishes and needs is enabled.

In a preferred embodiment, electrical contacts and the battery being arranged in the battery holder are freely contactable. Thus, electric energy can be easily obtained from the battery arranged in the battery holder.

The invention is described in more detail by the enclosed schematic figures, wherein:
- Figure 1: schematically shows a perspective view of a key fob with a battery holder according to the invention,
- Figure 2: schematically shows a perspective view of a battery holder according to the invention with a battery arranged thereon and

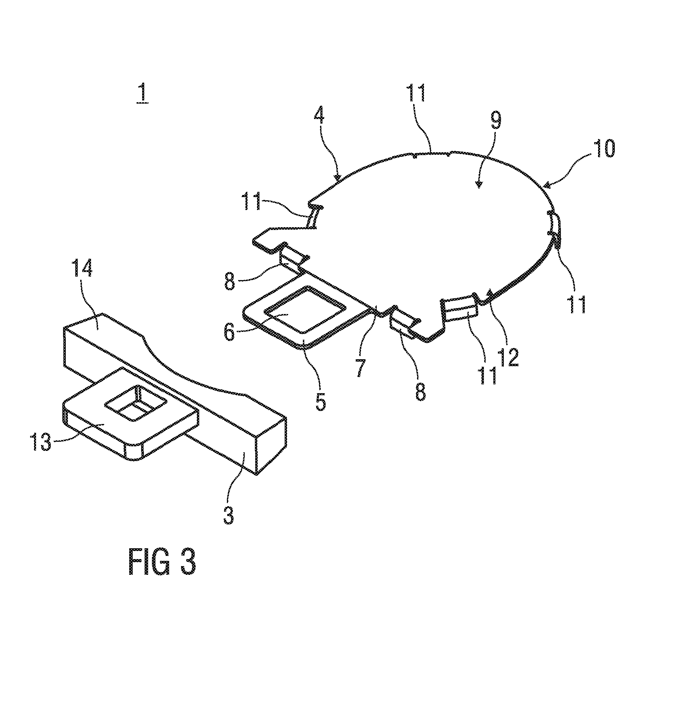

- Figure 3: schematically shows an exploded view of the battery holder.

Corresponding parts are marked with the same reference symbols in all figures.

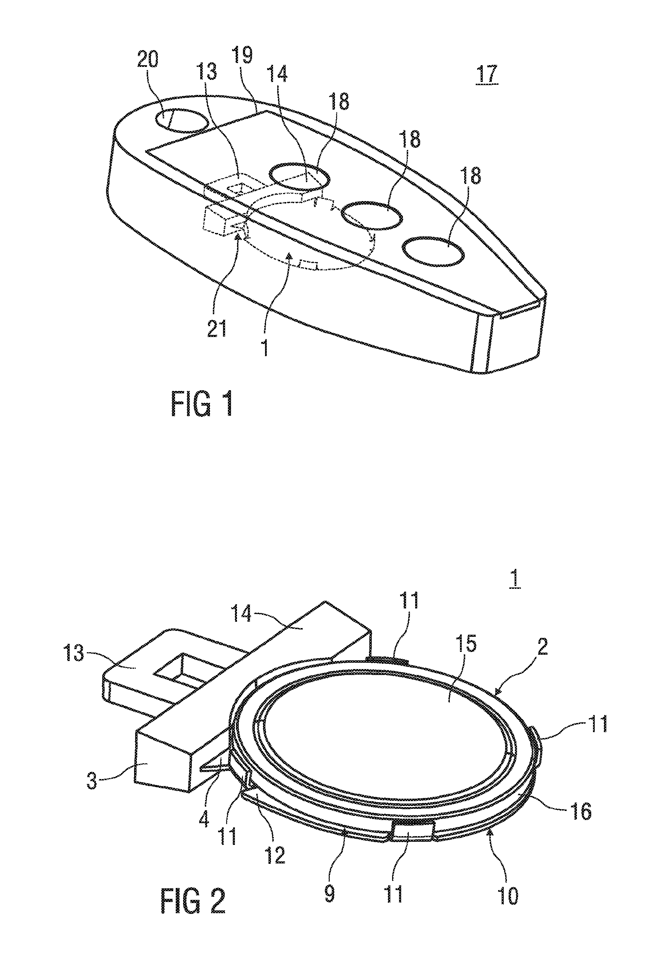

In figure 1, a perspective view of a key fob 17 with a battery holder 1 according to the invention is schematically shown. Such a key fob 17 is formed as usual remote control for a central locking system of a vehicle. For that purpose the key fob 17 comprises a housing 19, several control elements 18 and a coupling element 20, by which the key fob 17 can for example be arranged on a bunch of keys.

A battery compartment 21 is arranged in the interior of the key fob 17. This battery compartment 21 is formed corresponding to the battery holder 1 and it is formed as waterproof cavity. A not shown sealing range is formed within the inlet or entrance area of the cavity. When operating the key fob 17, the battery holder 1, with the battery 2 arranged thereon, is arranged in the battery compartment 21 supplying the key fob 17 with electrical energy.

Figure 2 schematically shows a perspective view of a battery holder 1 according to the invention with a battery 2 arranged thereon.

The battery 2 is formed as conventional coin cell, for example as lithium-ion cell.

Figure 2 schematically shows an exploded view of the battery holder 1.

The battery holder 1 comprises a gripping and gasket element 3 and a holding element 4.

The holding element 4 is made of a thin metal sheet and is for example formed as embossing part.

A projection 5 is arranged at one side of the holding element 4. A cut-out 6 is formed in the interior of this projection 5.

According to the embodiment of the invention described herein, the projection 5 and the cut-out 6 are substantially squarely formed. Alternative embodiments may make use of different geometries of projection 5 cut-out 6, as for example a circular shape.

Due to the cut-out 6, the holding element 4 and thus the battery holder 1 as a whole can be better gripped.

The holding element 4 is extended to a width in a coupling range 7 attached to the square projection 5, the width substantially corresponding to a diameter of the circular battery 2.

One respective retaining element 8 is formed on both sides of the square projection 5 in the coupling range 7, which is bended rectangularly or nearly rectangularly to the residual holding element 4 and which projects over the section of the coupling range 7.

A holding range 9 is attached to the coupling range 7, whereas the surface area of the holding range 9 is formed corresponding to the surface area of the battery 2 to be arranged. As a consequence, this holding range 9 is circularly formed on its end arranged opposite to the square projection 5. This curvature 10 is formed corresponding to the battery 2.

Four holding clamps 11 are directly formed on the edges of the holding range 9. These holding clamps 11 are circularly oriented, wherein the circle created by the holding clamps 11 is formed corresponding to the outer diameter of the battery 2. The holding clamps 11 are rectangularly or nearly rectangularly formed to the residual holding element 4 in such a matter that a battery 2, arranged in the holding range 9 of the holding element 4, is securely held between the holding clamps 11.

Guiding ranges 12 are formed on both sides of the holding range 9 on its edge, the guiding ranges 12 projecting the battery 2 inserted in the holding range 9 and corresponding to the not shown guiding grooves being formed in the battery compartment 21 of the key fob 17. Accurate sliding of the battery holder 1 in the guiding grooves of the battery compartment 21 within the key fob 17 is achieved by means of the guiding ranges 12 facilitating an error-free insertion of the battery holder 1 in the key fob 17.

A gripping and gasket element 3 is arranged in the area of the square projection 5 and/or in the coupling range 7 of the holding element 4. This gripping and gasket element 3 nearly completely encloses the area of the square projection 5 and/or the coupling range 7.

The gripping and gasket element 3 especially encloses the retaining elements 8 in the coupling range 7, so that a secure and solid connection between holding element 4 and gripping and gasket element 3 is achieved.

The gripping and gasket element 3 is preferably made of plastics and it is for example adhered, welded or splashed at the holding element 4 in usual manner.

The gripping and gasket element 3 comprises a handhold range 13 and a sealing range 14 forming a combined one-piece component.

The sealing range 14 is formed corresponding to the sealing range of the battery compartment 21 within the key fob 17, thus enabling a waterproof ending of the battery compartment 21 within the key fob 17. Thus, the battery 2 is waterproof arranged during the operation of the key fob 17.

In a not shown embodiment, an additional sealing element can be formed or arranged at the sealing range 14.

The stability of the holding element 4 being made of a thin sheet metal is significantly improved by the arrangement of the gripping and gasket element 3 at the holding element 4. Advantageously, especially the stability and the grip of the projection 5 and the handhold range 13 are increased.

For achieving another increase of grip or for adapting the surface feel of the handhold range 13 to the particular customer wishes and needs, the gripping and gasket element 3 can, at least in certain areas, be provided with a surface coating or a structured surface.

During operation of the battery holder 1, the battery 2 is securely held between the holding clamps 11 in the holding range 9. The electrical contacts 15 and 16 of the battery 2 are thereby freely contactable by means of conventional, not shown contact arrangements.

### List of references

- 1: battery holder
- 2: battery
- 3: gripping and gasket element
- 4: holding element
- 5: projection
- 6: cut-out
- 7: coupling range
- 8: retaining element
- 9: holding range
- 10: curvature
- 11: holding clamp
- 12: guiding range
- 13: handhold range
- 14: sealing range
- 15: electrical contact
- 16: electrical contact
- 17: key fob
- 18: control element
- 19: housing
- 20: coupling element
- 21: battery compartment

## Claims

1. A battery holder (1) for a key fob (17),
**characterised in that**
a holding element (4) is enclosed by a gripping and gasket element (3) at least in sections or area by area, wherein a holding range (9) is formed at the holding element (4) and guiding ranges (12) are formed at both sides of the holding range (9) on its edge, wherein the guiding ranges (12) are formed corresponding to guiding grooves within the key fob (17).

2. The battery holder (1) according to claim 1,
**characterised in that**
a base area of the holding range (9) is formed corresponding to a base area of a battery (2) to be arranged.

3. The battery holder (1) according to claim 1 or 2,
**characterised in that** several, preferably four, circularly oriented holding clamps (11) are directly formed on the edges of the holding range (9), whereas the circle being created by the holding clamps (11) is formed corresponding to the outer diameter of the battery (2).

4. The battery holder (1) according to claim 3,
**characterised in that** the holding clamps (11) are rectangularly or nearly rectangularly oriented to the residual holding element (4) in such a manner that a battery (2), being arranged in the holding range (9) of the holding element (4), is securely held between the holding clamps (11).

5. The battery holder (1) according to claim 1,
**characterised in that**
the holding element (4) is made of a sheet metal.

6. The battery holder (1) according to claim 1,
**characterised in that**
the gripping and gasket element (3) is made of plastics.

7. The battery holder (1) according to claim 1 or 6,
**characterised in that**
the gripping and gasket element (3) comprises a handhold range (13) and a sealing range (14) forming a combined one-piece component.

8. The battery holder (1) according to claim 1, 6 or 7,
**characterised in that**
the sealing range (14) of the gripping and gasket element (3) is formed corresponding to a sealing range within the key fob (17).

9. The battery holder (1) according to claim 1, 6, 7 or 8, **characterised in that**
an additional sealing element is formed or arranged at the sealing range (14) of the gripping and gasket element (3).

10. The battery holder (1) according to one of the preceding claims, **characterised in that**
the gripping and gasket element (3) is, at least in certain areas, provided with a surface coating or a structured surface.

11. The battery holder (1) according to one of the preceding claims, **characterised in that**
the electrical contacts (15) and (16) of the battery (2) arranged in the battery holder (1) are freely contactable.
